# EUROPEAN PATENT SPECIFICATION

(11) **EP 2 677 563 B1**
(45) Date of publication and mention of the grant of the patent: **28.04.2021**
(21) Application number: 13159204.0
(22) Date of filing: 14.03.2013
(51) Int. Cl.: H01M 2/04, H01M 2/10, H01M 2/30

(54) **Rechargeable battery and module of the same**
Wiederaufladbare Batterie und Modul daraus
Batterie rechargeable et son module

(30) Priority: 20.06.2012 US 201261662142 P; 01.03.2013 US 201313783048
(43) Date of publication of application: 25.12.2013
(73) Proprietor: Samsung SDI Co., Ltd., Yongin-si, Gyeonggi-do (KR); Robert Bosch GmbH, 70442 Stuttgart (DE)
(72) Inventor: Kim, Duk-Jung, Yongin-si, Gyeonggi-do (KR)
(74) Representative: Gulde & Partner

(56) References cited:
- EP-A1- 2 315 296
- EP-A2- 2 212 940
- US-A1- 2009 181 288

## Description

### FIELD OF THE INVENTION

Aspects of embodiments of the present invention relate to a rechargeable battery and a module thereof.

### DESCRIPTION OF THE RELATED ART

Unlike a primary battery that is not rechargeable, a rechargeable battery may be repeatedly charged and discharged. A small-capacity rechargeable battery is typically used for small portable electronic devices, such as mobile phones, notebook computers, camcorders, and the like, while a large-capacity rechargeable battery may be used as a motor-driving power source for a hybrid vehicles, or an electric vehicle for example. European Patent Application EP 2 315 296 is concerned with a battery structure including multiple batteries. A secondary battery pack is disclosed in WO 2009/066953.

The rechargeable battery may be used in small electronic devices as a single-cell battery or as a motor-driving power source, for example, as a battery module in which a plurality of cells are electrically connected. The rechargeable battery module may be formed by connecting electrode terminals through a bus bar.

In the rechargeable battery module, neighboring unit cells are electrically connected, and an insulating layer may be formed for external insulation of each unit cell. However, portions where the insulating layer is not provided may be electrically connected through water. That is, an aqueous circuit may cause an external short circuit of the unit cell.

The above information disclosed in this Background section is only for enhancement of understanding of the background of the described technology and therefore it may contain information that does not form the prior art that is already known in this country to a person of ordinary skill in the art.

### SUMMARY

According to an aspect of embodiments of the present invention, a rechargeable battery and a module thereof are configured for preventing or substantially preventing an external short circuit caused by an aqueous circuit. According to another aspect of embodiments of the present invention, a rechargeable battery and a module thereof have improved external insulation properties.

According to the present invention, a rechargeable battery comprises at least one unit cell including an electrode assembly, a case containing the electrode assembly therein, a cap plate sealing an opening of the case, and a first terminal protruding through the cap plate and electrically connected to the electrode assembly, an insulating cover covering the at least one unit cell, wherein the insulating cover is provided with a first opening exposing the first terminal of the at least one unit cell. The battery further comprises an insulation member provided with a receiving space for receiving the at least one unit cell. The cell sealing is provided between the insulation member and the insulating cover. The first terminal has a dual sealing structure formed with the cell sealing and the terminal sealing, and the second terminal has a single sealing structure formed with the cell sealing.

The insulating cover is a separate element distinct from the cap plate.

The battery may further comprise a cell sealing provided between the cap plate of the at least one unit cell and the insulating cover.

In one embodiment, the battery further comprises the first terminal sealing disposed around the first terminal of at least one unit cell and disposed between the cap plate of the at least one unit cell and the insulating cover.

The insulation member may be flexible to receive the at least one unit cell in a press-fit manner therein.

The cell sealing is preferably disposed on the periphery of the at least one unit cell, even more preferable disposed on the cap plate between the insulating cover and an upper edge of the insulation member.

The first terminal sealing is provided between the insulation member and the insulating cover.

The at least one unit cell may comprise an insulator disposed between the cap plate and the first terminal and the first terminal sealing may be disposed on the periphery of the insulation member.

In one embodiment, the insulating cover comprises receiving grooves for receiving the cell sealing and/or the first terminal sealing therein. Preferably, the insulating cover has a first drain groove formed in the periphery of the first opening.

For assembling the insulating cover to the unit cell, the insulating cover may comprise
an adhesive provided on surface of the insulating cover facing a surface of the respective unit cell. Additionally or alternatively, protruding elements may be provided on the insulating cover, protruding towards and an engaging with an outer surface of the respective unit cell. The protruding elements are preferably provided on at least two opposing side surfaces of the insulating cover and comprise a plurality of spaced apart protruding elements on each of the two opposing side surfaces of the insulating cover, or a continuous protruding element on each of the two opposing side surfaces of the insulating cover.

The battery or battery module may comprise a plurality of unit cells, wherein the insulating cover is an integral member which covers the cap plates of the plurality of unit cells. The insulation member may be provided with receiving spaces each for receiving a unit cell, the receiving spaces being separated by cell barriers. The insulating cover may comprise a plurality of first openings each exposing the first terminal of a unit cell.

The battery module may further include a plurality of terminal seals, each surrounding the terminal of a corresponding unit cell of the plurality of unit cells and being arranged between the cover and the cap plate of the corresponding unit cell. The battery module may further include a plurality of cell seals, each between the cover and the cap plate of a respective unit cell of the corresponding unit cells, each of the cell seals being arranged around a periphery of the cap plate of the respective unit cell and surrounding the terminal of the respective unit cell.

A rechargeable battery module according to an exemplary embodiment includes unit cells each forming rechargeable battery, an insulation member for receiving the unit cells, and a cover for covering the unit cells.

According to an exemplary embodiment, the unit cell can be received by the insulation member and covered with the cover, thus preventing or substantially preventing an external short circuit caused by an aqueous circuit.

### BRIEF DESCRIPTION OF THE DRAWINGS

The accompanying drawings, together with the specification, illustrate some exemplary embodiments of the present invention, and, together with the description, serve to explain principles and aspects of the present invention.
FIG. 1 is a perspective view of a rechargeable battery module according to an exemplary embodiment of the present invention.
FIG. 2 is an exploded perspective view of the rechargeable battery module of FIG. 1.
FIG. 3 is an exploded perspective view of a rechargeable battery according to an exemplary embodiment of the present invention.
FIG. 4 is a cross-sectional view of the rechargeable battery of FIG. 3, taken along the line IV-IV.
FIG. 5 is a cross-sectional view of the rechargeable battery module of FIG. 1, taken along the line V-V.
Fig. 6 is an exploded perspective view of a rechargeable battery module according to an exemplary embodiment of the present invention.
Fig. 7 is an exploded perspective view of a rechargeable battery module according to another exemplary embodiment of the present invention.
Fig. 8 is an exploded perspective view of a rechargeable battery module according to yet another exemplary embodiment of the present invention.

### DETAILED DESCRIPTION

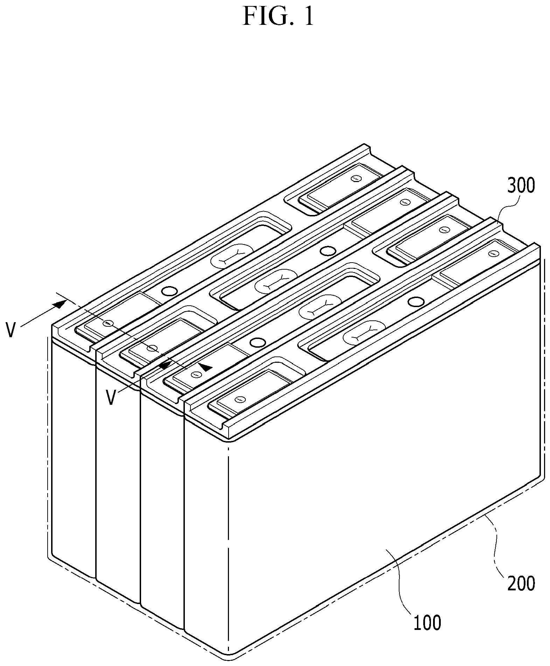

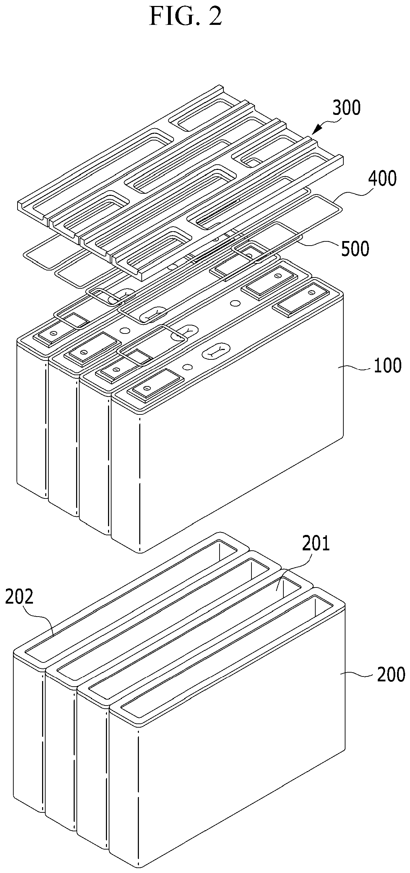

FIG. 1 is a perspective view of a rechargeable battery module according to an exemplary embodiment of the present invention, and FIG. 2 is an exploded perspective view of the rechargeable battery module of FIG. 1.

Referring to FIGS. 1 and 2, a rechargeable battery module according to an embodiment of the present invention includes unit cells 100 each forming a rechargeable battery, an insulation member 200 for receiving the unit cells 100, and an electrically insulating cover 300 for covering the unit cells 100. The electrically insulating cover 300 is simply be called cover 300 throughout the following.

However, the rechargeable battery of the present invention may not comprise the insulation member 200 but only the cover 300 for covering the unit cells 100. The cover 300 prevents the formation of an aqueous circuit on the top surface of the battery or battery module. The insulation member 200 is just optionally provided. This holds for all the embodiments of the invention described in the following paragraphs.

The insulation member 200 and the cover 300 are used for external electrical insulation of the unit cells 100, and may prevent or substantially prevent an external short circuit of the unit cells 100 due to an aqueous circuit formed by condensed water. That is, in one embodiment, the insulation member 200 and cover 300 have structures for individually insulating the unit cells 100.

In one embodiment, as shown in FIG. 2, the insulation member 200 may have a one-body structure in which each of the unit cells 100 is independently received and insulated. In this case, the cover 300 may individually cover the unit cells 100 while in contact with the insulation member 200.

The insulation member 200 may be formed in a one-body structure in which the unit cells 100 are independently received or in an individual structure in which the unit cells 100 are independently insulated. In either of the two cases, the cover 300 may alternatively be formed in a one-body structure (not shown) in which a plurality of the unit cells 100 are insulated.

As shown in FIGS. 1 and 2, the insulation member 200, in one embodiment, is formed as one body and has receiving spaces which are separated by cell barriers 201, and may be formed in a flexible housing structure.

Accordingly, openings 202 formed on the insulation member 200 may be expanded and then contracted when the unit cells 100 are inserted, thus enabling the unit cells 100 to be held. In other words, the unit cells 100 are inserted into the insulation member 200 in a press-fit manner.

In one embodiment, the rechargeable battery module may further include cell sealings 400 between the insulation member 200 and the cover 300. The cell sealings 400 are disposed around the unit cells 100, respectively, so that the unit cells 100 may be sealed individually.

In one embodiment, one insulation member 200 and one cover 300 are provided to one unit cell 100. In this case, one cell sealing 400 seals the insulation member 200 for receiving the unit cell 100 from the cover 300 for covering the unit cell 100. Accordingly, an external short circuit between neighboring unit cells 100 is prevented or substantially prevented.

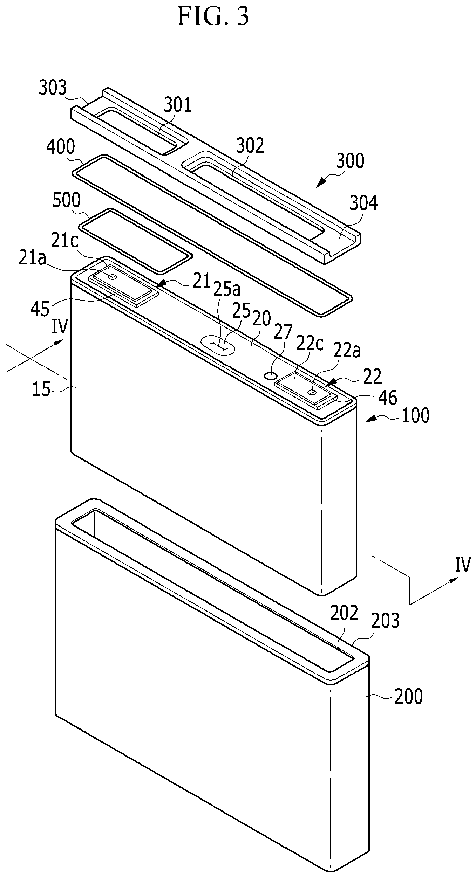

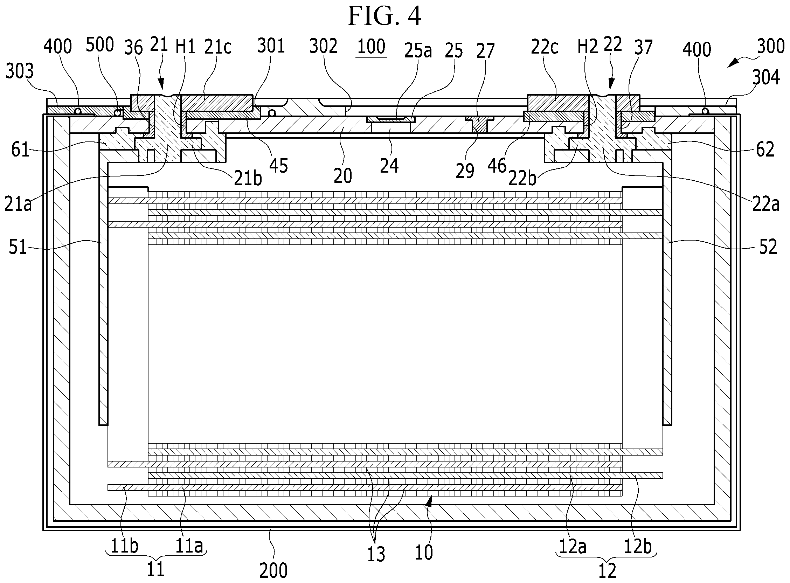

FIG. 3 is an exploded perspective view of a rechargeable battery according to an exemplary embodiment of the present invention, and FIG. 4 is a cross-sectional view of the rechargeable battery of FIG. 3, taken along the line IV-IV.

Referring to FIGS. 3 and 4, the unit cell 100 includes an electrode assembly 10 for charging and discharging currents, a case 15 for containing the electrode assembly 10, a cap plate 20 sealing an opening of the case 15, and a first electrode terminal 21 (e.g., a negative terminal) and a second electrode terminal 22 (e.g., a positive terminal) attached to the cap plate 20.

As in the rechargeable battery module described above, the unit cell 100 includes an insulation member 200 for receiving the unit cell 100, and a cover 300 for covering the unit cell 100. In one embodiment, the unit cell 100 may further include a cell sealing 400 provided between the insulation member 200 and the cover 300. The cover 300 of the battery module is different and distinct from its cap plate 20, i.e. the cover 300 and the cap plate 20 are separate elements. Also, the insulation member 200 is different and distinct from the battery case 15. The insulation member 200 and the case 15 are separate elements.

The electrode assembly 10 may be formed by disposing a first electrode 11 (e.g., a negative electrode) and a second electrode 12 (e.g., a positive electrode) at both sides of a separator 13, which is an insulator, and winding the first electrode 11, the separator 13, and the second electrode 12 in a jelly roll shape.

The first electrode 11 and the second electrode 12 include coated regions 11a and 12a and uncoated regions 11b and 12b, respectively. The coated regions 11a and 12a are formed by applying an active material to a current collector of a metal plate, and the uncoated regions 11b and 12b are formed as an exposed current collector where the active material is not applied.

In one embodiment, the uncoated region 11b of the first electrode 11 is formed at one end of the first electrode 11 along the first electrode 11, which is wound, the uncoated region 12b of the second electrode 12 is formed at one end of the second electrode 12 along the second electrode 12, which is wound, and the uncoated regions 11b and 12b are disposed at respective ends of the electrode assembly 10.

In one embodiment, the case 15 has an approximately cuboid shape, an inner space for receiving the electrode assembly 10 and electrolyte solution, and an opening formed at one side of the case 15 for connecting the inner space with the outside. The opening allows the electrode assembly 10 to be inserted into the case 15.

The cap plate 20 is attached to the case 15 at the opening to seal the case 15. In one embodiment, the case 15 and the cap plate 20 are formed of aluminum and are welded together.

In one embodiment, the cap plate 20 includes an electrolyte injection opening 29, a vent hole 24, and terminal holes H1 and H2. The electrolyte solution may be injected into the case 15 through the electrolyte injection opening 29 after the cap plate 20 is combined with the case 15. The electrolyte injection opening 29 may be sealed with a sealing plug 27 when the electrolyte solution is completely injected.

The vent hole 24 may be closed and sealed with a vent plate 25 so as to release an internal pressure of the rechargeable battery. The vent plate 25 is cut or ruptured to open the vent hole 24 when the internal pressure reaches or exceeds a pressure (e.g., a predetermined pressure). The vent plate 25 may have a notch 25a for guiding the cut.

The first terminal 21 and the second terminal 22 are connected through the terminal holes H1 and H2 of the cap plate 20 and electrically connected to the electrode assembly 10. That is, the first electrode 21 is electrically connected to the first electrode 11 of the electrode assembly 10, and the second terminal 22 is electrically connected to the second electrode 12 of the electrode assembly 10. Accordingly, the electrode assembly 10 is drawn out to an outside of the case 15 through the first terminal 21 and the second terminal 22.

In one embodiment, the first and second terminals 21 and 22 include rivet terminals 21a and 22a attached to the terminal holes H1 and H2 of the cap plate 20, flanges 21b and 22b formed integrally with the rivet terminals 21a and 22a inside the cap plate 20, and plate terminals 21c and 22c disposed outside the cap plate 20 and connected with the rivet terminals 21a and 22a, respectively, such as through riveting or welding.

First and second electrode gaskets 36 and 37 are attached between the rivet terminals 21a and 22a of the first and second terminals 21 and 22 and the terminal holes H1 and H2, respectively, of the cap plate 20, thus sealing and electrically insulating the cap plate 20 from the rivet terminals 21a and 22a of the first and second terminals 21 and 22, respectively.

The first and second electrode gaskets 36 and 37, in one embodiment, are extended and attached between the flanges 21b and 22b and an inner surface of the cap plate 20 to further seal and electrically insulate the flanges 21b and 22b, respectively, from the cap plate 20. The first and second electrode gaskets 36 and 37 prevent or substantially prevent leakage of the electrolyte solution through the terminal holes H1 and H2, respectively, which may otherwise be caused by attaching the first and second terminals 21 and 22 to the cap plate 20.

First and second electrode lead tabs 51 and 52 electrically connect the first and second terminals 21 and 22 to the first and second electrodes 11 and 12 of the electrode assembly 10, respectively. In one embodiment, the first and second electrode lead tabs 51 and 52 are connected to lower portions of the rivet terminals 21a and 22a to caulk the lower portions, respectively. Thus, in one embodiment, the first and second electrode lead tabs 51 and 52 are supported by the flange 21b and 22b and connected to the lower portions of the rivet terminals 21a and 22a, respectively.

In one embodiment, first and second electrode insulation members 61 and 62 are attached between the first and second electrode lead tabs 51 and 52 and the cap plate 20 to electrically insulate the first and second electrode lead tabs 51 and 52, respectively, from the cap plate.

In one embodiment, the first and second electrode insulation members 61 and 62 each have one side connected to the cap plate 20 and other sides surrounding the first and second electrode lead tabs 51 and 52, the rivet terminals 21a and 22a, and the flanges 21b and 22b, respectively, thus stabilizing connection structures thereof.

In one embodiment, an insulator 45 of the first terminal 21 is disposed between the cap plate 20 and the plate terminal 21c of the first terminal 21 and passes through the rivet terminal 21a to electrically insulate the plate terminal 21c from the cap plate 20.

The cap plate 20, in one embodiment, has a receiving groove formed on an outer surface thereof and receives a lower portion of the insulator 45, such that the insulator 45 and the first terminal 21 may be accurately located on the cap plate 20.

In one embodiment, the insulator 45 and the plate terminal 21c are connected to an upper portion of the rivet terminal 21a to caulk the upper portion of the rivet terminal 21a. Thus, in one embodiment, the insulator 45 and the plate terminal 21c are coupled to the upper portion of the rivet terminal 21a, such that the plate terminal 21c is attached outside the cap plate 20, and the insulator 45 is disposed therebetween.

The first electrode gasket 36, in one embodiment, is extended between the rivet terminal 21a and the insulator 45 through the terminal hole H1. That is, in one embodiment, the first electrode gasket 36 electrically insulates the rivet terminal 21a from the cap plate 20.

In one embodiment, a top plate 46 of the second terminal 22 is disposed between the plate terminal 22c and the cap plate 20 and passes through the rivet terminal 22a to electrically connect the plate terminal 22c with the cap plate 20.

The cap plate 20, in one embodiment, may have a receiving groove formed on the outer surface thereof and receiving a lower portion of the top plate 46, such that the top plate 46 and the second terminal 22 may be accurately located on the cap plate 20.

In one embodiment, the top plate 46 and the plate terminal 22c are connected to an upper portion of the rivet terminal 22a to caulk the upper portion of the rivet terminal 22a. Thus, in one embodiment, the top plate 46 and the plate terminal 22c are coupled to the upper portion of the rivet terminal 22a, and the plate terminal 22c is attached outside the cap plate 20 while the top plate 46 is disposed therebetween.

The second electrode gasket 37, in one embodiment, is extended between the rivet terminal 22a and the top plate 46 through the terminal hole H2. That is, the second electrode gasket 37 prevents or substantially prevents the rivet terminal 22a and the top plate 46 from being electrically and directly connected, and the rivet terminal 22a is electrically connected to the top plate 46 through the plate terminal 22c.

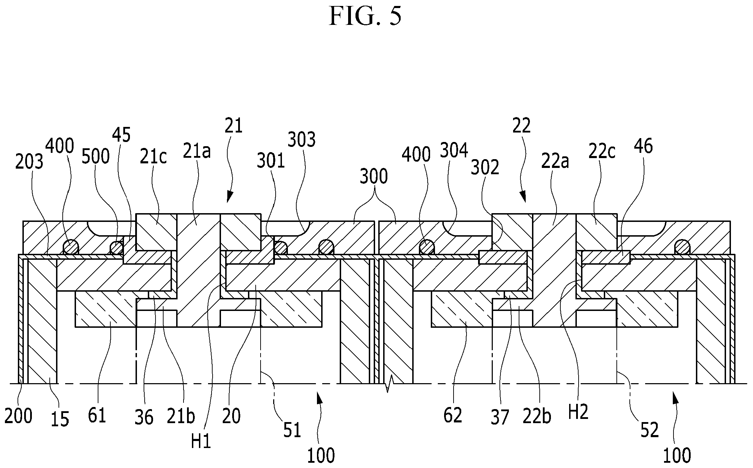

FIG. 5 is a cross-sectional view of the rechargeable battery module of FIG. 1, taken along the line V-V. Referring to FIGS. 3 to 5, in one embodiment, the unit cell 100 may further include a terminal sealing 500 between the insulation member 200 and the cover 300. The terminal sealing 500 is provided to seal the first terminal 21 or the second terminal 22 in the unit cell 100, thus preventing or substantially preventing an external short circuit caused by an aqueous circuit.

In one embodiment, in the unit cell 100, the terminal sealing 500 is disposed around at least one of the first and second terminals 21 and 22 to seal the terminal. For convenience, FIG. 5 illustrates a configuration in which the terminal sealing 500 is disposed outside the first terminal 21.

The cap plate 20 of the unit cell 100 is disposed at the opening 202 of the insulation member 200, and an upper edge 203 forming the opening 202 of the insulation member 200 is disposed on the cap plate 20. That is, the upper edge 203 of the insulation member 200 is disposed between the cap plate 20 and the cover 300 to insulate therebetween.

The cell sealing 400, in one embodiment, is disposed between the cap plate 20 and the cover 300. The cell sealing 400 may be disposed between the cover 300 and the upper edge 203 of the insulation member 200 disposed on the cap plate 20 to block an aqueous circuit that may be formed from outside the unit cell 100 to inside the unit cell 100.

The terminal sealing 500, in one embodiment, is disposed between the cap plate 20 and the cover 300. The terminal sealing 500 may be disposed outside the insulator 45 to block an aqueous circuit that may be formed from the first terminal 21 to the second terminal 22 in the unit cell 100.

The first terminal 21 has a dual sealing structure formed with the cell sealing 400 and the terminal sealing 500, and the second terminal 22 has a single sealing structure formed with the cell sealing 400. Accordingly, in the first terminal 21 and the second terminal 22 of neighboring unit cells 100, an aqueous circuit is blocked by one terminal sealing 500 and two cell sealings 400.

The cover 300 is made of an electrically insulating material and covers the cap plate 20. The cover 300, in one embodiment, has receiving grooves for connecting the cell sealing 400 and the terminal sealing 500 to fix the cell sealing 400 and the terminal sealing 500 to positions thereof on the cap plate 20. The cover 300, in one embodiment, has a first opening 301 for exposing the first terminal 21 and a second opening 302 for exposing the second terminal 22. The second opening 302 may be formed to further expose the vent hole 24 and the electrolyte injection opening 29.

The first opening 301 is connected with the insulator 45 of the first terminal 21, and the second opening 302 is connected with the top plate 46 of the second terminal 22. Accordingly, the cover 300 may be accurately located on the cap plate 20.

The cover 300, in one embodiment, has a first drain groove 303 and a second drain groove 304 formed around or in the periphery of the first opening 301 and the second opening 302, respectively, to drain condensed water. The first drain groove 303 may be formed at a side of the first opening 301 to guide water to one side of the insulation member 200. The second drain groove 304 may be formed at an opposite side of the first drain groove 303 in the second opening 302 to guide water to another side of the insulation member 200.

In one embodiment, the first and second drain grooves 303 and 304 are formed in a curved surface toward the first and second terminals 21 and 22, respectively, to facilitate collecting condensed water. The first and second drain grooves 303 and 304, in one embodiment, are open at both sides in a lengthwise direction of the cap plate 20 to guide condensed water to both sides of the unit cell 100 and drain the condensed water to side surfaces of the insulation member 200.

The rechargeable battery module may be formed by disposing a bus bar (not shown) on the cover 300 and welding both ends of the bus bar with the plate terminals 21c and 22c of the first and second terminals 21 and 22, respectively. The cell sealing 400 and the terminal sealing 500 may maintain the aqueous circuit being strongly blocked by a weld strength between the bus bar and the plate terminals 21c and 22c.

In one embodiment, the rechargeable battery may be formed by attaching cover 300 and the upper edge 203 of the insulation member 200 to the unit cell 100 with an adhesive (not shown). The cell sealing 400 and the terminal sealing 500 may maintain the aqueous circuit being strongly blocked by adherence of the adhesive.

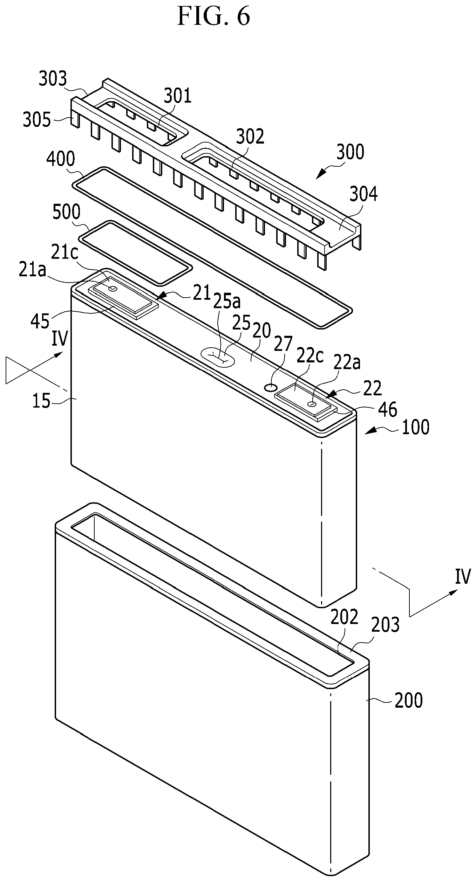

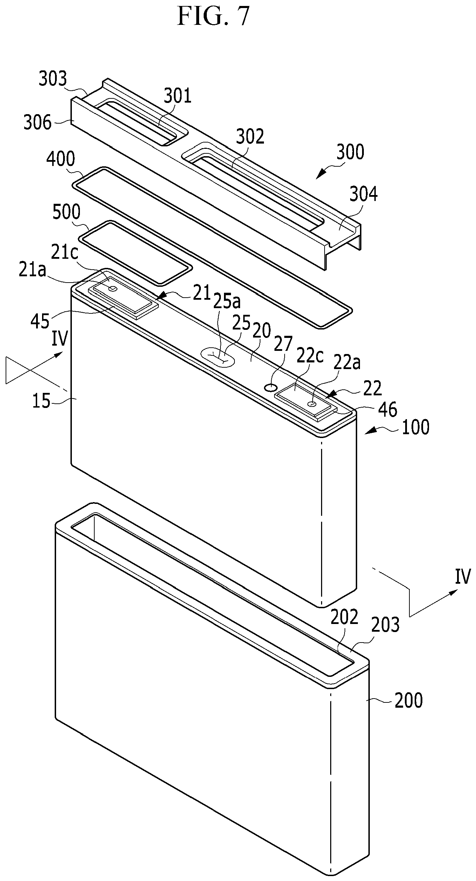

Fig. 6 and Fig. 7 are exploded perspective views of a rechargeable battery according to further exemplary embodiments of the present invention. They show a battery similar to the battery of Fig. 3. Only the differences with respect to Fig. 3 will be discussed in the following.

With respect to Fig. 3, for assembling the insulating cover 300 to the unit cell 100, the cover 300 additionally comprises protruding or fixing elements 305 protruding from the cover 300 toward the unit cell 100. During assembling the protruding elements 305 press against the outer surface of the unit cell 100 to fix the cover 300 to the unit cell 100 in a press-fit manner. Alternatively, they press against outer surfaces of the insulation member 200 to fix the cover 300 to the insulation member 200 in a press-fit manner.

In the exemplary embodiment of Fig. 6, the protruding elements 305 are provided to contact or engage with two opposing side surfaces of the unit cell 100. The protruding elements in Fig. 6 are tooth like elements 305 being provided spaced apart from each other. In Fig. 6, the protruding elements 305 extend downwardly from two opposing side surfaces of the cover 300. However, the protruding elements 305 may also be formed to extend from all four side surfaces of the cover 300.

In the exemplary embodiment of Fig. 7, the protruding elements 306 are continuous skirt like elements, which extend from two opposing side surfaces of the cover 300. Preferably, a skirt like element is formed as an integral part of a side surface of the cover 300. The protruding elements 306 extend from the top surface of the cover 300 downwardly such that they partly enclose or frame two opposing side surfaces of the unit cell 100. During assembly, the protruding elements 306 expand and press-fit against the respective outer surfaces of the unit cell 100 or alternatively, against the insulating member 200. With respect to the embodiment of Fig. 6, the skirt like protruding elements 306 of Fig. 7 provide a better grip after assembly.

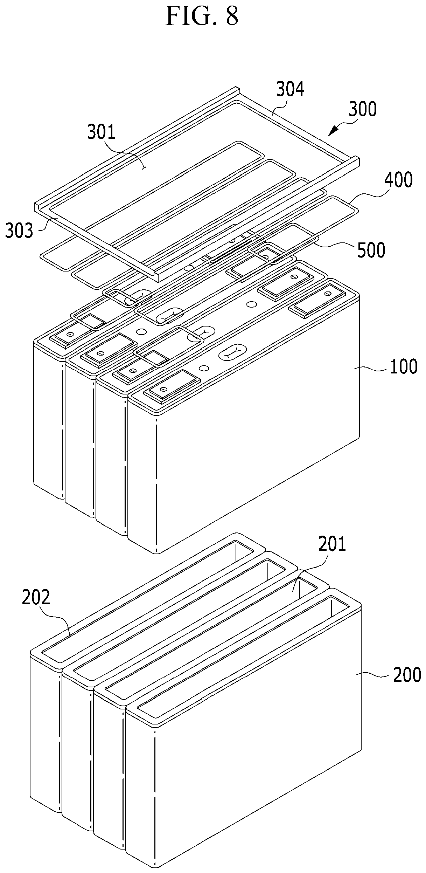

Fig. 8 is an exploded perspective view of a rechargeable battery module according to yet another exemplary embodiment of the present invention. As in the other exemplary embodiments of the invention, the cover 300 is mounted on a plurality of unit cells 100 above individual cell sealings 400 and terminal sealings 500. However, the cover 300 comprises only a single first opening 301, the first opening 301 exposing the terminals of all unit cells 100 of the battery module. The first opening 301 is preferably surrounded on two sides by a rim (at the long sides of the cover 300 in Fig. 8), a first drain groove 303 and a second drain groove 304 formed around or in the periphery of the first opening 301, respectively, to drain condensed water. The first drain groove 303 is formed at one side of the first opening 301 to guide water to one side of the insulation member 200. The second drain groove 304 is formed at the opposite side of the first drain groove 303 to guide water to another side of the insulation member 200.

## Claims

1. A rechargeable battery comprising:
at least one unit cell (100) including an electrode assembly (10), a case (15) containing the electrode assembly (10) therein, a cap plate (20) sealing an opening of the case (15), a first terminal (21) and a second terminal (22) protruding through the cap plate (20) and electrically connected to the electrode assembly (10),
an insulating cover (300) covering the at least one unit cell (100),
wherein the insulating cover (300) is provided with a first opening (301) exposing the first terminal (21) of the at least one unit cell (100), the battery further comprising an insulation member (200) provided with a receiving space (202) for receiving the at least one unit cell (100) wherein a cell sealing (400) is provided between the insulation member (200) and the insulating cover (300), wherein the first terminal (21) has a sealing structure formed with the cell sealing (400) and a terminal sealing (500) disposed around the first terminal (21) of at least one unit cell (100) and disposed between the cap plate (20) of the at least one unit cell (100) and the insulating cover (300), and the second terminal (22) has a different sealing structure formed only with the cell sealing (400).

2. Battery of claim 1, further comprising the cell sealing (400) provided between the cap plate (20) of the at least one unit cell (100) and the insulating cover (300).

3. Battery of claim 1, wherein the insulation member (200) is flexible to receive the at least one unit cell (100) in a press-fit manner therein.

4. Battery of claim 1 or 3, wherein the cell sealing (400) is disposed on the periphery of the at least one unit cell (100), even more preferable disposed on the cap plate (20) between the insulating cover (300) and an upper edge (203) of the insulation member (200).

5. Battery of one of the preceding claims, wherein the terminal sealing (500) is provided between the insulation member (200) and the insulating cover (300).

6. Battery of one of claims 1 to 5, wherein at least one unit cell (100) comprises an insulator (45) disposed between the cap plate (20) and the first terminal (21) and the terminal sealing (500) is disposed on the periphery of the insulation member (200).

7. Battery of one of the claims 2 to 6, wherein the insulating cover (300) comprises receiving grooves for receiving the cell sealing (40) and/or the terminal sealing (500) therein.

8. Battery of any of the previous claims, wherein the insulating cover (300) has a first drain groove (303) formed in the periphery of the first opening (301).

9. Battery of any of the previous claims, wherein, for assembling the insulating cover (300) to the unit cell (100), the insulating cover (300) comprises:
- an adhesive provided on surface of the insulating cover (300) facing a surface of the respective unit cell (100), and/or
- protruding elements (305) provided on the insulating cover (300), protruding towards and an engaging with an outer surface of the respective unit cell (100).

10. Battery of claim 9, wherein the protruding elements (305, 306) are provided on at least two opposing side surfaces of the insulating cover (300) and comprise:
- a plurality of spaced apart protruding elements (305) on each of the two opposing side surfaces of the insulating cover (300), or
- a continuous protruding element (306) on each of the two opposing side surfaces of the insulating cover (300).

11. Battery of any of the previous claims, wherein the battery comprises a plurality of unit cells (100) the insulating cover (300) is an integral member which covers the cap plates (20) of the plurality of unit cells (100).

12. Battery of claim 11, wherein the insulation member (200) is provided with receiving spaces (202) each for receiving a unit cell (100), the receiving spaces (202) being separated by cell barriers (201).

13. Battery of claim 11 or 12, wherein the insulating cover (300) comprises a plurality of first openings (301) each exposing the first terminal (21) of a unit cell (100).

## Patentansprüche

1. Eine wiederaufladbare Batterie, aufweisend:
zumindest eine Einheitszelle (100), die eine Elektrodenanordnung (10), ein Gehäuse (15), das die Elektrodenanordnung (10) darin enthält, eine Abdeckplatte (20), die eine Öffnung des Gehäuses (15) abdichtet, einen ersten Anschluss (21) und einen zweiten Anschluss (22), die durch die Abdeckplatte (20) vorstehen und mit der Elektrodenanordnung (10) elektrisch verbunden sind, aufweist,
eine Isolierabdeckung (300), die zumindest eine Einheitszelle (100) bedeckt,
wobei die Isolierabdeckung (300) mit einer ersten Öffnung (301), die den ersten Anschluss (21) der zumindest einen Einheitszelle (100) freilegt, bereitgestellt wird, wobei die Batterie ferner ein Isolierelement (200), das mit einem Aufnahmeraum (202) zum Aufnehmen der zumindest einen Einheitszelle (100) bereitgestellt wird, aufweist, wobei eine Zellendichtung (400) zwischen dem Isolierelement (200) und der Isolierabdeckung (300) bereitgestellt wird, wobei der erste Anschluss (21) eine Dichtungsstruktur, die mit der Zellendichtung (400) ausgebildet ist, und eine Anschlussdichtung (500), die um den ersten Anschluss (21) zumindest einer Einheitszelle (100) herum angeordnet ist und zwischen der Abdeckplatte (20) der zumindest einen Einheitszelle (100) und der Isolierabdeckung (300) angeordnet ist, aufweist und der zweite Anschluss (22) eine andere Dichtungsstruktur, die nur mit der Zellendichtung (400) ausgebildet ist, aufweist.

2. Batterie nach Anspruch 1, ferner aufweisend die Zellendichtung (400), die zwischen der Abdeckplatte (20) der zumindest einen Einheitszelle (100) und der Isolierabdeckung (300) bereitgestellt wird.

3. Batterie nach Anspruch 1, wobei das Isolierelement (200) flexibel ist, um die zumindest eine Einheitszelle (100) in Presspassung darin aufzunehmen.

4. Batterie nach Anspruch 1 oder 3, wobei die Zellendichtung (400) auf dem Umfang der zumindest einen Einheitszelle (100) angeordnet ist, noch bevorzugter auf der Abdeckplatte (20) zwischen der Isolierabdeckung (300) und einem oberen Rand (203) des Isolierelements (200) angeordnet ist.

5. Batterie nach einem der vorhergehenden Ansprüche, wobei die Anschlussdichtung (500) zwischen dem Isolierelement (200) und der Isolierabdeckung (300) bereitgestellt wird.

6. Batterie nach einem der Ansprüche 1 bis 5, wobei zumindest eine Einheitszelle (100) einen Isolator (45), der zwischen der Abdeckplatte (200) und dem ersten Anschluss (21) angeordnet ist, aufweist und die Anschlussdichtung (500) auf dem Umfang des Isolierelements (200) angeordnet ist.

7. Batterie nach einem der Ansprüche 2 bis 6, wobei die Isolierabdeckung (300) Aufnahmenuten zum Aufnehmen der Zellendichtung (40) und/oder der Anschlussdichtung (500) darin aufweist.

8. Batterie nach einem der vorhergehenden Ansprüche, wobei die Isolierabdeckung (300) eine erste Drain-Nut (303), die im Umfang der ersten Öffnung (301) ausgebildet ist, aufweist.

9. Batterie nach einem der vorhergehenden Ansprüche, wobei die Isolierabdeckung (300) Folgendes zum Zusammenbauen der Isolierabdeckung (300) mit der Einheitszelle (100) aufweist:
- einen Kleber, der auf einer Oberfläche der Isolierabdeckung (300), die einer Oberfläche der jeweiligen Einheitszelle (100) zugewandt ist, bereitgestellt wird, und/oder
- Vorsprungselemente (305), die auf der Isolierabdeckung (300) bereitgestellt werden und zu einer Außenfläche der jeweiligen Einheitszelle (100) hin vorstehen und mit besagter Außenfläche in Eingriff stehen.

10. Batterie nach Anspruch 9, wobei die Vorsprungselemente (305, 306) auf zumindest zwei gegenüberliegenden Seitenflächen der Isolierabdeckung (300) bereitgestellt werden und aufweisen:
- eine Vielzahl voneinander beabstandeter Vorsprungselemente (305) auf jeder der zwei gegenüberliegenden Seitenflächen der Isolierabdeckung (300), oder
- ein durchgehendes Vorsprungselement (306) auf jeder der zwei gegenüberliegenden Seitenflächen der Isolierabdeckung (300).

11. Batterie nach einem der vorhergehenden Ansprüche, wobei die Batterie eine Vielzahl von Einheitszellen (100) aufweist, wobei die Isolierabdeckung (300) ein einstückiges Element ist, das die Abdeckplatten (20) der Vielzahl der Einheitszellen (100) bedeckt.

12. Batterie nach Anspruch 11, wobei das Isolierelement (200) mit Aufnahmeräumen (202) jeweils zum Aufnehmen einer Einheitszelle (100) bereitgestellt wird, wobei die Aufnahmeräume (202) durch Zellenbarrieren (201) voneinander getrennt sind.

13. Batterie nach Anspruch 11 oder 12, wobei die Isolierabdeckung (300) eine Vielzahl erster Öffnungen (301), die jeweils den ersten Anschluss (21) einer Einheitszelle (100) freilegen, aufweist.

## Revendications

1. Batterie rechargeable comprenant :
au moins une cellule unitaire (100) comportant un ensemble d'électrodes (10), un boîtier (15) contenant l'ensemble d'électrodes (10) en son sein, une plaque de capuchon (20) scellant une ouverture du boîtier (15), une première borne (21) et une deuxième borne (22) faisant saillie à travers la plaque de capuchon (20) et reliées électriquement à l'ensemble d'électrodes (10),
un couvercle isolant (300) recouvrant l'au moins une cellule unitaire (100),
dans laquelle le couvercle isolant (300) est pourvu d'une première ouverture (301) exposant la première borne (21) de l'au moins une cellule unitaire (100), la batterie comprenant en outre un organe d'isolation (200) pourvu d'un espace de réception (202) destiné à recevoir l'au moins une cellule unitaire (100) où un scellement de cellule (400) est prévu entre l'organe d'isolation (200) et le couvercle isolant (300), où la première borne (21) a une structure d'étanchéité formée du scellement de cellule (400) et d'un scellement de borne (500) disposé autour de la première borne (21) d'au moins une cellule unitaire (100) et disposé entre la plaque de capuchon (20) de l'au moins une cellule unitaire (100) et le couvercle isolant (300), et la deuxième borne (22) a un structure d'étanchéité différente formée uniquement du scellement de cellule (400).

2. Batterie de la revendication 1, comprenant en outre le scellement de cellule (400) prévu entre la plaque de capuchon (20) de l'au moins une cellule unitaire (100) et le couvercle isolant (300).

3. Batterie de la revendication 1, dans laquelle l'organe d'isolation (200) est flexible pour recevoir à l'intérieur l'au moins une cellule unitaire (100) par ajustement serré.

4. Batterie de la revendication 1 ou 3, dans laquelle le scellement de cellule (400) est disposé sur la périphérie de l'au moins une cellule unitaire (100), encore plus préférablement disposé sur la plaque de capuchon (20) entre le couvercle isolant (300) et un bord supérieur (203) de l'organe d'isolation (200).

5. Batterie de l'une des revendications précédentes, dans laquelle le scellement de borne (500) est prévu entre l'organe d'isolation (200) et le couvercle isolant (300).

6. Batterie de l'une des revendications 1 à 5, dans laquelle au moins une cellule unitaire (100) comprend un isolateur (45) disposé entre la plaque de capuchon (20) et la première borne (21) et le scellement de borne (500) est disposé sur la périphérie de l'organe d'isolation (200).

7. Batterie de l'une des revendications 2 à 6, dans laquelle le couvercle isolant (300) comprend des rainures de réception destinées à recevoir à l'intérieur le scellement de cellule (40) et/ou le scellement de borne (500).

8. Batterie de l'une des revendications précédentes, dans laquelle le couvercle isolant (300) présente une première rainure de drainage (303) formée dans la périphérie de la première ouverture (301).

9. Batterie de l'une des revendications précédentes, dans laquelle, pour assembler le couvercle isolant (300) à la cellule unitaire (100), le couvercle isolant (300) comprend :
- un adhésif prévu sur la surface du couvercle isolant (300) faisant face à une surface de la cellule unitaire respective (100), et/ou
- des éléments en saillie (305) prévus sur le couvercle isolant (300), faisant saillie vers et s'engageant avec une surface extérieure de la cellule unitaire respective (100).

10. Batterie de la revendication 9, dans laquelle les éléments en saillie (305, 306) sont prévus sur au moins deux surfaces latérales opposées du couvercle isolant (300) et comprennent :
- une pluralité d'éléments en saillie espacés (305) sur chacune des deux surfaces latérales opposées du couvercle isolant (300), ou
- un élément en saillie continu (306) sur chacune des deux surfaces latérales opposées du couvercle isolant (300) .

11. Batterie de l'une des revendications précédentes, où la batterie comprend une pluralité de cellules unitaires (100), le couvercle isolant (300) est un organe monobloc qui recouvre les plaques de capuchon (20) de la pluralité de cellules unitaires (100).

12. Batterie de la revendication 11, dans laquelle l'organe d'isolation (200) est pourvu d'espaces de réception (202) destinés chacun à recevoir une cellule unitaire (100), les espaces de réception (202) étant séparés par des barrières cellulaires (201).

13. Batterie de la revendication 11 ou 12, dans laquelle le couvercle isolant (300) comprend une pluralité de premières ouvertures (301) exposant chacune la première borne (21) d'une cellule unitaire (100).
